# EUROPÄISCHE PATENTSCHRIFT

(11) **EP 1 668 426 B1**
(45) Veröffentlichungstag und Bekanntmachung des Hinweises auf die Patenterteilung: **09.11.2011**
(21) Anmeldenummer: 04765543.6
(22) Anmeldetag: 23.09.2004
(51) Int. Cl.: G03G 15/00, G03G 15/01, H04N 1/40

(54) **VERFAHREN UND EINRICHTUNG ZUR KORREKTUR DER PAPIERSCHRUMPFUNG BEI DER GENERIERUNG EINER BITMAP**
METHOD AND DEVICE FOR CORRECTING PAPER SHRINKAGE DURING GENERATION OF A BITMAP
PROCEDE ET DISPOSITIF DE CORRECTION DU RETRAIT DU PAPIER LORS DE LA GENERATION D'UNE TABLE DE BITS

(30) Priorität: 24.09.2003 DE 10344238
(43) Veröffentlichungstag der Anmeldung: 14.06.2006
(73) Patentinhaber: OCÉ Printing Systems GmbH, 85586 Poing (DE)
(72) Erfinder: JÖRGENS, Dieter, 85598 Baldham (DE); GIBISCH, Herbert, 81825 München (DE); THIEMANN, Peter, 80804 München (DE)
(74) Vertreter: Schaumburg, Thoenes, Thurn, Landskron, Eckert
(86) Internationale Anmeldenummer: PCT/EP2004/010687
(87) Internationale Veröffentlichungsnummer: WO 2005/031470

(56) Entgegenhaltungen:
- DE-A1- 10 111 216
- US-A- 4 721 969
- US-A1- 2001 006 584
- US-A1- 2003 174 200
- PATENT ABSTRACTS OF JAPAN Bd. 2000, Nr. 16, 8. Mai 2001 (2001-05-08) -& JP 2001 013752 A (MITSUBISHI HEAVY IND LTD), 19. Januar 2001 (2001-01-19)
- PATENT ABSTRACTS OF JAPAN Bd. 014, Nr. 025 (P-991), 18. Januar 1990 (1990-01-18) & JP 01 266568 A (CANON INC), 24. Oktober 1989 (1989-10-24)
- PATENT ABSTRACTS OF JAPAN Bd. 016, Nr. 306 (M-1276), 6. Juli 1992 (1992-07-06) -& JP 04 085060 A (OLYMPUS OPTICAL CO LTD), 18. März 1992 (1992-03-18)
- PATENT ABSTRACTS OF JAPAN Bd. 012, Nr. 099 (E-594), 31. März 1988 (1988-03-31) & JP 62 230156 A (NEC CORP), 8. Oktober 1987 (1987-10-08)
- PATENT ABSTRACTS OF JAPAN Bd. 2000, Nr. 21, 3. August 2001 (2001-08-03) & JP 2001 088363 A (NEC CORP), 3. April 2001 (2001-04-03)

## Beschreibung

Die Erfindung betrifft ein Verfahren und eine Einrichtung zum Bedrucken eines Aufzeichnungsträgers, bei dem ein Aufzeichnungsträger durch eine Druckeinrichtung in einem ersten Druckvorgang mit einem ersten Tonerbild bedruckt wird, das erste Tonerbild in einer Fixiereinrichtung auf dem Aufzeichnungsträger fixiert wird, wobei der Aufzeichnungsträger längs mindestens eine Hauptachse schrumpft, und bei dem anschließend derselbe Aufzeichnungsträger in einem zweiten Druckvorgang mit einem zweiten Tonerbild bedruckt wird.

Es gibt zahlreiche Druck-Betriebsarten, bei denen ein Aufzeichnungsträger nach dem Bedrucken mit einem ersten Tonerbild einen Fixiervorgang durchläuft. Bei diesem Fixiervorgang, der im allgemeinen unter Druck und relativ hoher Temperatur erfolgt, wird die Feuchtigkeit im Aufzeichnungsträger, im allgemeinen Papier, reduziert, wodurch eine Schrumpfung in Längsrichtung und/oder Breitenrichtung erfolgt. In diesen beiden Richtungen kann der Schrumpfungseffekt unterschiedlich sein, abhängig von der Faserrichtung im Papier. Ebenso hängt der Grad der Schrumpfung von den Parametern des Fixierprozesses ab. Wenn anschließend auf denselben Aufzeichnungsträger ein weiteres Tonerbild aufgebracht wird, so sind die beiden Druckbilder bei sonst gleichem Druckvorgang nicht mehr zueinander passgenau, was zu Qualitätseinbußen führt. Typischerweise kann die Schrumpfung in Richtung einer Hauptachse bis zu 1% betragen, d.h. bei einem Blatt der Größe DIN-A 4 kann die Schrumpfung in Längsrichtung mehr als 2 mm sein. Bei noch größeren Formaten wird der Effekt noch deutlicher.

Aus der WO 98/18054 derselben Anmelderin ist ein Verfahren zum Betreiben eines Druckers mit zwei Druckwerken bekannt, bei dem verschiedene Betriebsarten realisiert werden können. Bei einem Duplex-Druckbetrieb werden Einzelblätter beidseitig bedruckt, wobei zwischen dem jeweiligen Druckvorgang eine Fixierung erfolgt. Eine andere Betriebsart ist der Zweifarben-Simplexdruck, bei dem auf der Vorderseite eines Einzelblattes zwei Bildmuster verschiedener Farbe gedruckt werden. Diese Betriebsart ist auch als Highlight-Color-Druck bekannt. Eine weitere Betriebsart ist der Zweifarben-Duplexdruck, bei dem die Vorderseite und die Rückseite eines Einzelblattes mit Bildmustern verschiedener Farbe bedruckt werden. In Verbindung mit der Beschreibung eines Ausführungsbeispiels wird auf die genannte Druckschrift weiter unten nochmals Bezug genommen.

Aus den Dokumenten DE 101 11 216 A1 und JP 01-266568 A sind Drucksysteme und Druckverfahren bekannt, bei denen zu erzeugende Druckbilder abhängig von einer Schrumpfung des Trägermaterials korrigiert werden. Eine solche Schrumpfung des Trägermaterials entsteht insbesondere durch Hitzeinwirkung auf einen Aufzeichnungsträger, auf den das Druckbild erzeugt werden soll. Aus dem Dokument EP 0 685 959 A2 ist bekannt, in Pixelform gespeicherte Bilder mit Hilfe von Rasterzellen, die 2 x 2 Rasterzellen umfassen, zu analysieren und zu überprüfen, ob Farbübergänge von schwarzen zu weißen Rasterzellen vorhanden sind. Ferner ist aus dem Dokument EP 0 469 282 A2 ein Druckverfahren oder ein Drucksystem bekannt, bei dem die Größe von auf einem Trägermaterial übereinander gedruckten Farbauszügen eines Druckbildes der Papierschrumpfung des beim Fixieren jedes Farbauszugs erfolgten

Weiterhin ist aus der EP 0 699 315 A1 eine elektrografische Druckeinrichtung zum Bedrucken von bandförmigen Aufzeichnungsträgern unterschiedlicher Bandbreite bekannt. Ein Papierband wird an einem einzigen Druckwerk mit einer nutzbaren Breite von mindestens der doppelten Breite des Papierbandes in Nebeneinander-Stellung transportiert und bedruckt. In den verschiedenen Druck-Betriebsarten erfolgt eine Zwischenfixierung des ersten Tonerbildes, wobei eine Schrumpfung der Papierbahn erfolgt. In Zusammenhang mit der Beschreibung von Ausführungsbeispielen wird auf den Inhalt dieses Dokuments näher eingegangen.

Aus dem Dokument JP 2001-013752 ist ein Verfahren und eine Vorrichtung zum Bedrucken eines Aufzeichnungsträgers bekannt, bei denen ein Aufzeichnungsträger in mindestens zwei Druckvorgängen mit jeweils einem Tonerbild bedruckt wird, wobei die Tonerbilder nach jedem Druckvorgang auf dem Aufzeichnungsträger fixiert werden. Durch diese Fixiervorgang schrumpft der Aufzeichnungsträger, wodurch eine der Schrumpfung entsprechende Anpassung der Größe der Druckbilder erforderlich ist.

Aus den Dokumenten US 4,721,969; JP 04085060; JP 62230156 und US 2003/0174200 sind weitere Bilderzeugungsverfahren und Bilderzeugungseinrichtungen bekannt, bei denen eine Größenanpassung von Druckbildern durchgeführt wird.

Es ist möglich, den Schrumpfungseffekt zu reduzieren, indem das Trägermaterial vor dem Druckvorgang durch Trocknung auf eine niedrige relative Feuchte gebracht wird. Bei der anschließenden ersten Fixierung ist dann der Schrumpfungseffekt reduziert. Eine solche Maßnahme ist jedoch mit einem hohen Aufwand verbunden. Eine andere Möglichkeit besteht darin, nach dem ersten Fixiervorgang das Trägermaterial klimatisch zu behandeln und die beim ersten Druckvorgang herrschende ursprüngliche relative Feuchte wieder herzustellen. Der bei der Fixierung erfolgte Schrumpfungsprozess wird somit rückgängig gemacht. Auch diese Maßnahme ist mit einem sehr hohen technischen Aufwand verbunden.

Es ist Aufgabe der Erfindung, ein Verfahren und eine Einrichtung anzugeben, das bzw. die es gestattet, mit relativ geringem technischen Aufwand eine hohe Druckqualität auf dem Trägermaterial zu erzeugen.

Diese Aufgabe wird durch die Merkmale der unabhängigen Ansprüche gelöst. Vorteilhafte Weiterbildungen sind in den abhängigen Ansprüchen angegeben.

Gemäß der ein Verfahren betreffenden Erfindung erfolgt die Schrumpfungskorrektur durch einen softwaretechnischen Eingriff bei der Generierung der Bitmap für die Erzeugung des latenten Bildes für den ersten Druckvorgang oder für den zweiten Druckvorgang. Hierbei wird die Anzahl der beim Drucken zu berücksichtigenden Bildpunkte entsprechend der zu erwartenden Schrumpfung in Richtung der Hauptachse geändert. Im wesentlichen verläuft die Hauptachse in Zeilenrichtung, in der bei einem LED-Zeichengenerator die LED-Zeile verläuft. Beim ersten Druckvorgang kann bei der Generierung der Bitmap das Druckbild durch Einfügen von zusätzlichen Bildpunkten in Zeilenrichtung vergrößert werden. Die zugehörigen LEDs werden hierbei so gesteuert, dass sie an den betreffenden Bildpunkt-Positionen keine einzufärbenden Bildpunkte produzieren. Soll die Schrumpfung beim zweiten Druckvorgang berücksichtigt werden, so ist bei der Generierung der zugehörigen Bitmap die Anzahl der beim Drucken zu berücksichtigenden Bildpunkte entsprechend zu verringern. Demgemäß werden bei der Generierung der Bitmap Bildpunkte weggelassen und entsprechend die Zeilenlänge verkürzt.

Vorzugsweise erfolgt das Hinzufügen von Bildpunkten zur Verlängerung der Zeile bzw. das Weglassen der Bildpunkte zur Verkürzung der Zeile für aufeinander folgende Zeilen an gleichen Bildpunkt-Positionen, so dass insgesamt Druckpunkt-Spalten in der Bitmap hinzugefügt oder weggelassen werden. Ebenso ist es möglich, das genannte Prinzip auch dann anzuwenden, wenn die Hauptachse in Transportrichtung des Aufzeichnungsträgers verläuft, d.h. es werden auf ähnliche Weise Bildpunktzeilen hinzugefügt oder weggelassen, um die Schrumpfung auszugleichen.

Gemäß einem weiteren Aspekt der Erfindung wird eine Einrichtung zum Bedrucken eines Aufzeichnungsträgers angegeben. Diese Einrichtung ermöglicht die Kompensation des Schrumpfungseffektes.

Zum besseren Verständnis der vorliegenden Erfindung wird im folgenden auf die in den Zeichnungen dargestellten bevorzugten Ausführungsbeispiele Bezug genommen, die anhand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder den Verfahren sowie derartige weitere Anwendungen der Erfindung, wie sie darin aufgezeigt sind, als übliches derzeitiges oder künftiges Fachwissen eines zuständigen Fachmannes angesehen werden. Die Figuren zeigen Ausführungsbeispiele der Erfindung, nämlich:
- Figur 1: ein Einzelblatt-Drucksystem mit zwei Druckwerken und zwei Fixierstationen,
- Figur 2: das Drucksystem nach Figur 1 in der Betriebsart Duplex-Druck,
- Figur 3: ein Drucksystem für bandförmiges Papier, das zweifach bedruckt wird,
- Figur 4: eine Anordnung mit einem LED-Zeichengenerator,
- Figur 5: ein Einzelblatt mit Duplexdruck,
- Figur 6: die Änderung einer Bitmap durch Weglassen einer Bildpunktspalte,
- Figur 7: die Änderung einer Bitmap durch Hinzufügen einer Bildpunktspalte,
- Figur 8: die Maßnahmen nach Figuren 6 und 7 angewandt auf den Buchstaben H,
- Figur 9: Maßnahmen beim Objekttyp Text, und

- Figur 10: Maßnahmen beim Objekttyp Grafik.

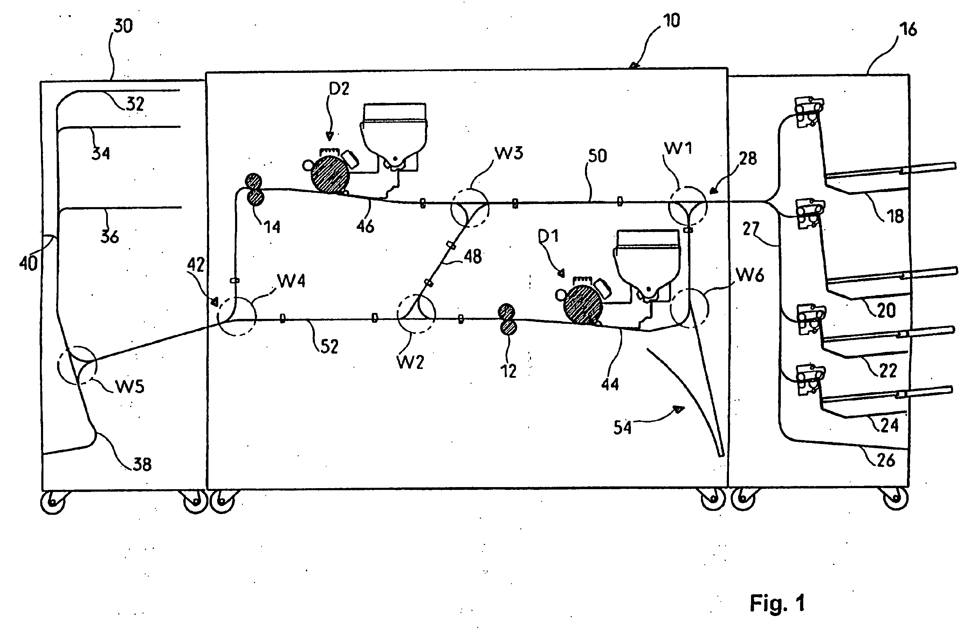

In Figur 1 ist ein Hochleistungsdrucker 10 dargestellt, bei dem die Erfindung eingesetzt werden kann. Der Hochleistungsdrucker 10 dient zum schnellen Drucken von Einzelblättern aus Papier und enthält ein erstes Druckwerk D1 sowie ein zweites Druckwerk D2. Beide Druckwerke D1, D2 arbeiten nach dem bekannten elektrografischen Verfahren. Den Druckwerken D1, D2 sind jeweils Fixierstationen 12, 14 nachgeschaltet, die schematisch durch zwei Rollenpaare angedeutet sind. An den Hochleistungsdrucker 10 ist eine Papiereingabe 16 angeschlossen, die mehrere Vorratsbehälter 18 bis 24 mit Einzelblättern sowie einen externen Papiereingabekanal 26 enthält. Über einen Transportkanal 27 werden Einzelblätter einem Eingabeabschnitt 28 zugeführt. Ausgabeseitig ist an den Hochleistungsdrucker 10 eine Papierausgabe 30 angeschlossen, die mehrere Ausgabebehälter 32 bis 36 enthält. Weiterhin sind zwei Ausgabekanäle 38, 40 vorgesehen, über die Einzelblätter an weiterverarbeitenden Stationen ausgegeben werden können. Der Hochleistungsdrucker 10 gibt die bedruckten Einzelblätter über den Ausgabeabschnitt 42 ab.

Im Inneren des Hochleistungsdruckers 10 sind Transportwege für den Transport der Einzelblätter angeordnet, durch die verschiedene Betriebsarten des Hochleistungsdruckers realisiert werden. Den Druckwerken D1, D2 sind jeweils Umdruck-Transportwege 44, 46 zugeordnet, die jeweils durch Antriebe so eingestellt sind, dass die zugeführten Einzelblätter an den Druckwerken D1, D2 ihre Umdruckgeschwindigkeit haben. Beide Umdruck-Transportwege 44, 46 sind über einen Verbindungskanal 48 miteinander verbunden. Der Transportweg um das erste Druckwerk D1 ist zu einem Ring durch einen Zuführkanal 50 ergänzt, über den auch Einzelblätter vom Eingabeabschnitt 28 dem zweiten Umdruck-Transportweg 46 zugeführt werden können. Der Transportweg für das zweite Druckwerk D2 wird auf ähnliche Weise zu einem Ring durch einen Abführkanal 52 ergänzt, über den vom Druckwerk D1 bedruckte Einzelblätter dem Ausgabeabschnitt 42 zugeführt werden können.

Zwischen dem Eingabeabschnitt 28, dem ersten Umdruck-Transportweg 44 und dem Zuführkanal 50 ist eine erste Weiche W1 angeordnet, die es ermöglicht, dass Einzelblätter vom Eingabeabschnitt 28 wahlweise dem ersten Umdruck-Transportweg 44 oder dem Zuführkanal 50 zugeführt werden. Eine weitere Variante besteht darin, dass auf dem Zuführkanal 50 in Richtung der ersten Weiche W1 transportierte Einzelblätter dem ersten Umdruck-Transportweg 44 zugeführt werden können.

Weiterhin sind eine zweite Weiche W2 und eine dritte Weiche W3 an den Enden des Verbindungskanals 48 angeordnet und verbinden jeweils die angrenzenden Transportwege 44, 48, 52 bzw. 46, 48, 50. Eine vierte Weiche W4 befindet sich in der Nähe des Ausgabeabschnitts 42 und verbindet die angrenzenden Transportwege. Die Papierausgabe 30 enthält eine fünfte Weiche W5, die als Wendevorrichtung arbeitet. Ferner ist noch auf eine Aussteuereinrichtung 54 hinzuweisen, der über eine Weiche W6 Ausschuss-Einzelblätter zugeführt werden.

Durch die in Figur 1 beschriebene Anordnung können verschiedene Betriebsarten des Hochleistungsdruckers 10 verwirklicht werden. Beim Simplex-Druck wird das Einzelblatt von einem Druckwerk D1 oder D2 nur auf einer Seite bedruckt und von der Fixierstation 12 oder 14 fixiert. Das weiter oben beschriebene Schrumpfungsproblem tritt bei dieser Betriebsart nicht auf.

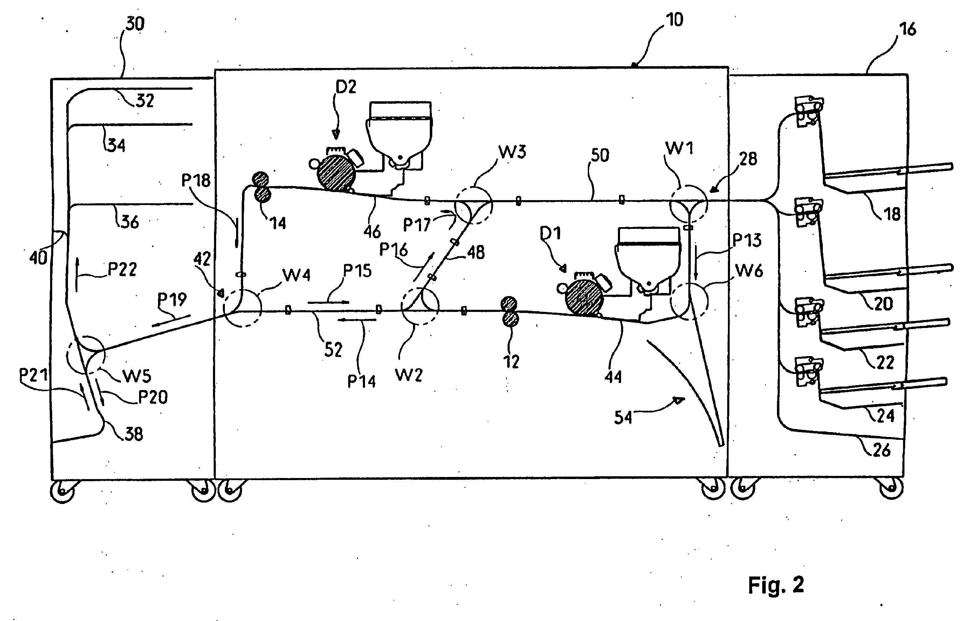

Figur 2 zeigt schematisch den Duplex-Druckbetrieb, bei dem die Einzelblätter beidseitig bedruckt werden. Die dem Eingabeabschnitt 28 zugeführten Einzelblätter werden durch die erste Weiche W1 dem ersten Umdruck-Transportweg 44 zugeführt (Pfeil P13). Nach dem Bedrucken durch das Druckwerk D1 und dem anschließenden Fixieren in der Station 12 wird das jeweilige Einzelblatt eine Wendestrecke gemäß dem Pfeil P14 über die Weiche W2 hinausgefördert. Diese Wendestrecke ist ein Teil des Abführkanals 52. Anschließend wird die Fördereinrichtung gemäß Pfeil P15 umgekehrt, und die Weiche W2 leitet dann das Einzelblatt gemäß dem Pfeil P16 in den Verbindungskanal 48. Das Einzelblatt wird dann von der Weiche W3 in Richtung des Pfeils P17 zum zweiten Umdruck-Transportweg 46 umgelenkt. Dem Druckwerk D2 wird also die noch nicht bedruckte Rückseite des Einzelblattes zum Bedrucken zugeführt. Dieses Einzelblatt ist aufgrund des Fixierungsprozesses geschrumpft. Nach dem zweiten Bedrucken folgt ein erneuter Fixiervorgang in der Fixierstation 14 unter Zuführung von Wärme und Druck. Anschließend werden die aufeinanderfolgenden Einzelblätter gemäß dem Pfeil P18 der Weiche W4 zugeführt und in die Papierausgabe 30 entlang dem Pfeil P19 transportiert. Da das Einzelblatt in diesem Zustand mit seiner Rückseite nach oben transportiert wird, ist es vor dem Ablegen in den Fächern 32 bis 36 noch zu wenden. Hierzu dient die Weiche W5. Das Einzelblatt wird zunächst durch die Weiche W5 in Richtung des Pfeils P20 für eine vorbestimmte Wendestrecke geführt. Dann wird die Transportrichtung gemäß dem Pfeil P21 umgekehrt und die Weiche W5 fördert das Einzelblatt in Richtung des Pfeils P22, woraufhin es in den Ablagefächern 32 bis 36 seitenrichtig abgelegt wird.

Eine weitere Betriebsart ist der Zweifarben-Simplexdruck, oft auch als Highlight-Color-Druck bezeichnet, bei dem die Vorderseite eines Einzelblattes mit zwei Bildmustern verschiedener Farbe bedruckt wird. Die beiden Druckwerke D1, D2 drucken dann Bildmuster verschiedener Farbe. Bei dieser Betriebsart wird das Einzelblatt über die Weiche W1 dem Druckwerk D1 zugeführt, bedruckt, und in der Fixierstation 12 zum ersten Mal fixiert, wobei eine Schrumpfung erfolgt. Anschließend wird das Einzelblatt über die Weiche W2 dem Verbindungskanal 48 ohne Wenden und dann über die Weiche W3 dem Druckwerk D2 zugeführt. Das Druckwerk D2 bedruckt die geschrumpfte Vorderseite mit einer von der Farbe des Druckwerks D1 verschiedenen Farbe. Anschließend wird in der Fixierstation 14 das Einzelblatt ein zweites Mal fixiert und über die Weiche W4 an die Papierausgabe 30 ausgegeben. Es ist auch ein Prozessablauf möglich, bei dem zuerst das Druckwerk D2 druckt und nach der Fixierung das Druckwerk D1 das zweite Tonerbild druckt.

Eine weitere Betriebsart mit Zwischenfixierung ist der Zweifarben-Duplexdruck, bei der die Vorderseite und die Rückseite eines Einzelblattes mit Bildmustern verschiedener Farbe bedruckt werden. Voraussetzung hierfür ist, dass die Druckwerke D1 und D2 verschiedenfarbige Druckbilder drucken. Zum zweifarbigen Bedrucken der Vorderseite wird wie bei der oben beschriebenen Betriebsart Zweifarben-Simplexdruck vorgegangen. Zunächst wird das Einzelblatt auf einer Seite zweifarbig mit den Druckwerken D1 und D2 bedruckt. Anschließend wird das Einzelblatt erneut dem Druckwerk D1 über den Kanal 48 und die Weiche W1 und W6 zum Bedrucken der Rückseite zugeführt. Damit diese Rückseite dem Druckwerk D1 zugeführt wird, muss auf dem Transportweg zwischen dem Druckwerk D2 und dem Druckwerk D1 das Einzelblatt gewendet werden. Dieses Wenden kann z.B. an der Weiche W4, der Weiche W2 oder der Weiche W3 erfolgen. Die zweite Farbe wird dann durch das Druckwerk D2 auf die Rückseite des Einzelblattes aufgedruckt. Bei den verschiedenen Fixiervorgängen kann das Einzelblatt unterschiedliche Schrumpfungen erfahren.

In der bereits erwähnten WO 98/18054 sind die verschiedenen Betriebsarten detaillierter beschrieben. Auf die dort gemachten Ausführungen wird hiermit Bezug genommen.

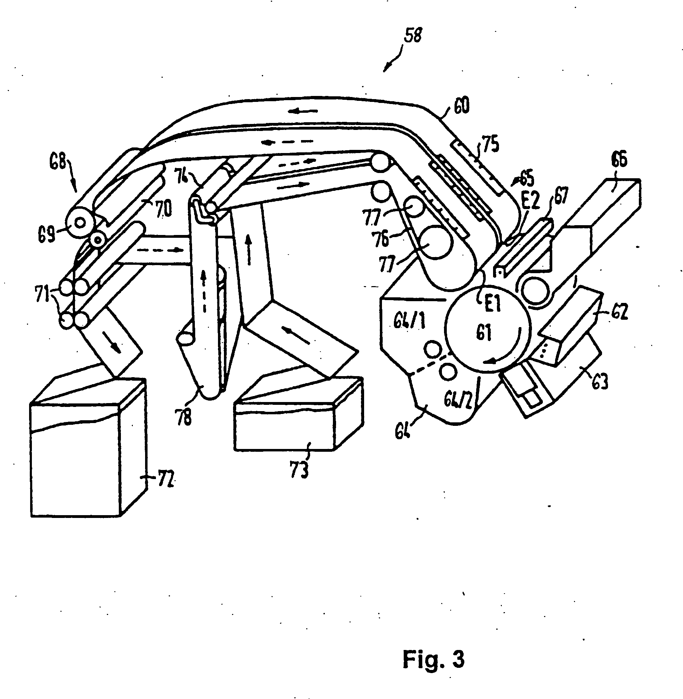

Figur 3 zeigt ein weiteres Beispiel eines Hochleistungsdrucksystems 58, das mit einem bandförmigen Trägermaterial 60 arbeitet. Abschnitte des Trägermaterials 60 werden zweimal an einer Fotoleitertrommel 68 mit mindestens der doppelten Breite des Bandmaterials vorbeigeführt und bedruckt, wobei eine Zwischenfixierung mit dem unvermeidlichen Schrumpfungsprozess erfolgt.

Um die Fotoleitertrommel 61 gruppieren sich die verschiedenen Aggregate für den elektrofotografischen Prozess. Eine Ladeeinrichtung 62 in Form eines Ladekorotrons zum Aufladen des Zwischenträgers 61, der als Fotoleitertrommel ausgebildet ist; ein LED-Zeichengenerator 63 mit einem Leuchtdiodenkamm zum zeichenabhängigen Belichten des Zwischenträgers 61, der sich über die gesamte nutzbare Breite des Zwischenträgers 61 erstreckt; eine Entwicklerstation 64 zum Einfärben des zeichenabhängigen Ladungsbildes auf dem Zwischenträger 61 mit Hilfe eines Ein- oder Zweikomponentenentwicklergemisches; eine Umdruckstation 65, die sich über die Breite des Zwischenträgers 61 erstreckt und mit der die Tonerbilder auf den Aufzeichnungsträger 61 übertragen werden. Zum Entfernen des Resttoners nach der Entwicklung und dem Umdruck ist eine Reinigungsstation 66 vorgesehen, mit darin integrierter Reinigungsbürste mit zugehöriger Absaugeinrichtung sowie einer Entladeeinrichtung 67. Der Zwischenträger 61 wird elektromotorisch angetrieben und im Druckbetrieb in Pfeilrichtung bewegt.

Weiterhin enthält die Druckeinrichtung 58 eine der Umdruckstation 65 in Transportrichtung des Aufzeichnungsträgers nachgeordnete Fixierstation 68, die als Thermodruckfixierstation ausgebildet ist, mit einer beheizten Fixierwalze 69 mit zugehöriger Andruckwalze 70, sowie der Fixierstation nachgeordneten Führungsrollen 71, die unter anderem als Ausgabeelemente für eine Stapeleinrichtung 72 für den Aufzeichnungsträger 60 dienen. Anstelle der dargestellten Fixierstation sind auch andere Fixierstationen möglich, z.B. mit einem beheizten oder unbeheizten Zulaufsattel. Der bandförmige Aufzeichnungsträger 60 ist zum Beispiel als vorgefaltetes, mit Randperforationen versehenes Endlospapier konfektioniert und wird ausgehend von einem Vorratsbereich 73 über Zuführrollen 74 der Umdruckstation zugeführt. Es ist jedoch auch möglich, einen Aufzeichnungsträger ohne Randperforationen über eine Rollenzuführung zuzuführen.

Der Transport des Aufzeichnungsträgers 60 erfolgt dabei vorzugsweise über eine der Umdruckstation 65 zugeordnete Transporteinrichtung 75 in Form von mit Stiften versehenen Transportbändern, die über Antriebswellen 77 geführt in die Randperforationen des Aufzeichnungsträgers 60 eingreifen. Für den Fall, dass ein transportlochfreier Aufzeichnungsträger verwendet wird, ist eine dem Fachmann geläufige, angepasste Transporteinrichtung vorzusehen, die den Aufzeichnungsträger z.B. durch Friktion, gesteuert durch eine Synchronisationsmarken abtastende Steueranordnung transportiert. Weiterhin ist im Gehäusebereich der Druckeinrichtung zwischen Vorratsbereich 73 und der Fixierstation 68 eine Umlenkeinrichtung 78 angeordnet, über die der Aufzeichnungsträger 60 von der Fixierstation 68 zur Umdruckstation 65 rückgeführt wird.

Die elektrographische Druckeinrichtung ist zum Bedrucken von Aufzeichnungsträgern unterschiedlicher Bandbreite geeignet. Zu diesem Zwecke weist der Zwischenträger 61 (Fotoleitertrommel) eine nutzbare Breite auf, die der größtmöglichen Aufzeichnungsträgerbreite entspricht (z.B. ein Format DIN A3 quer). Diese Breite entspricht der doppelten DIN A4 Breite. Damit ist es möglich, im Bereich der Umdruckstation 65 zwei Aufzeichnungsträgerbreiten DIN A4 längs nebeneinander anzuordnen. Die Fixierstation 68 und die anderen elektrofotografischen Aggregate, wie Entwicklerstation 64, Zeichengenerator 63, Reinigungsstation 66 sind entsprechend dieser nutzbaren Breite ausgelegt.

Eine Anpassung der Breite des Zeichengenerators 63 an unterschiedliche Aufzeichnungsträgerbreiten bedarf keiner mechanischen Änderung am Zeichengenerator, wenn wie in diesem Falle ein LED-Zeichengenerator verwendet wird, mit einer Vielzahl von in Reihen angeordneten LED's. Eine Anpassung an die verwendete Aufzeichnungsträgerbreite erfolgt durch Ansteuerung elektronisch.

Die in einem Rückführkanal für schmale Aufzeichnungsträger von der Fixierstation zur Umdruckstation angeordnete Umlenkeinrichtung 78 hat zwei Aufgaben: Sie dient im Durchlaufbetrieb zum seitlichen Versetzen der Aufzeichnungsträgerbahn und im Wendebetrieb zum Front-Rückseitenverdrehen des Aufzeichnungsträgers 60. Sie ist betriebsartenabhängig umschaltbar ausgestaltet.

Zum beidseitigen einfarbigen Bedrucken eines schmalen Aufzeichnungsträgers (einfarbiger Duplexbetrieb), wie er in der Figur 3 dargestellt ist, wird der schmale z.B. DIN A4 breite Aufzeichnungsträger 60 ausgehend von dem Vorratsbereich 73 über die Zuführrollen 74 der Umdruckstation 65 zugeführt und an seiner Oberseite mit einem Vorderseitentonerbild bedruckt. Die Vorderseite des Aufzeichnungsträgers 60 ist dabei durch ausgezogene Transportpfeile gekennzeichnet, die Unterseite durch gestrichelte Transportpfeile. Danach wird der Aufzeichnungsträger 60 mit dem Vorderseitentonerbild der Fixierstation 68 zugeführt und das Vorderseitentonerbild fixiert, wobei eine Schrumpfung des Aufzeichnungsträgers 60 erfolgt. Über die Führungsrollen 71 erfolgt ein Weitertransport des Aufzeichnungsträgers 60 zur Umlenkeinrichtung 78. Von der Umlenkeinrichtung 78 wird der Aufzeichnungsträger hinsichtlich seiner Vorder- und Rückseite gewendet und über die Zuführrollen 74 der Umdruckeinrichtung 65 erneut so zugeführt, dass seine Rückseite mit einem Rückseitentonerbild versehen werden kann. Danach wird der Aufzeichnungsträger 60 erneut der Fixierstation 68 zugeführt und das Rückseitentonerbild fixiert und anschließend der beidseitig bedruckte Aufzeichnungsträger in der Stapeleinrichtung 72 abgelegt.

Die Druckeinrichtung ist in der Betriebsart "zweifarbiger Duplexbetrieb" auch zum mehrfarbigen Druckbetrieb geeignet. Zu diesem Zwecke ist die Entwicklerstation 64 so ausgestaltet, dass sie auf dem Zwischenträger 61 getrennt einfärbbare Entwicklerzonen E1 und E2 erzeugt. Dabei ist jedem Positionsbereich der schmalen Aufzeichnungsträger 60 beim Durchlauf durch die Umdruckstation 65 eine entsprechende Entwicklerzone E1 bzw. E2 auf dem Zwischenträger 61 zugeordnet. Zur Erzeugung dieser getrennt einfärbbaren Entwicklerzonen E1 und E2 können den Entwicklerzonen jeweils zwei hintereinander angeordnete Entwicklerstationen 64/1 und 64/2 zugeordnet sein. Dabei enthält die Entwicklerstation 64/1 ein Tonergemisch einer ersten Farbe, z.B. rot und die Entwicklerstation 64/2 ein Entwicklergemisch in einer zweiten Farbe, z.B. schwarz. Die Entwicklerstationen 64/1 und 64/2 sind hinsichtlich der Entwicklerzonen E1 und E2 getrennt aktivierbar ausgestaltet.

Um entsprechend der Darstellung der Figur 3 einen schmalen Aufzeichnungsträger 60 beidseitig mit unterschiedlichen Farben bedrucken zu können, wird der Aufzeichnungsträger 60 in der bereits beschriebenen Weise durch die Druckeinrichtung geführt. In einem ersten Durchlauf durch die Umdruckstation 65 erfolgt dabei das Aufbringen eines Vorderseitenbildes in einer ersten Farbe, z.B. rot über die Entwicklerstation 64/1 in der Entwicklerzone E2. Danach erfolgt eine Fixierung in der Fixierstation 68. In einem zweiten Durchlauf durch die Umdruckstation 65, nach dem Wendevorgang über die Umlenkeinrichtung 78, wird über die Entwicklerstation 64/2 in der Entwicklerzone E1 ein Rückseitentonerbild in einer zweiten Farbe, z.B. schwarz, aufgebracht.

Eine weitere Betriebsart ist der "zweifarbige Simplexbetrieb", bei dem ein schmaler Aufzeichnungsträger 60 von beispielsweise der Breite A4 auf einer Seite mit zwei Farben bedruckt wird. Jeder Aufzeichnungsträgerposition auf der Umdruckstation 65 ist dabei eine getrennt einfärbbare Entwicklerzone E1, E2 zugeordnet. In einem ersten Durchlauf durch die Umdruckstation 65 erfolgt dabei der Aufdruck eines Tonerbildes über die Entwicklerzone E2 in einer ersten Farbe, z.B. rot. Danach wird das Tonerbild dieser ersten Farbe in der Fixierstation 68 fixiert, wobei eine Schrumpfung des Aufzeichnungsträgers erfolgt, und der Aufzeichnungsträger 60 wird ohne Wenden der Umdruckstation 65 mit der zugehörigen Entwicklerzone E1 erneut zugeführt. Die Umlenkeinrichtung 28 befindet sich dabei in Durchlaufposition und der Aufzeichnungsträger wird unter Beibehaltung der Vorderseiten-Rückseitenzuordnung nur breitenversetzt. Beim zweiten Durchlauf durch die Umdruckstation 65 wird dem ersten fixierten Tonerbild mit der ersten Farbe (rot) ein zweites Tonerbild mit der zweiten Farbe (beispielsweise schwarz) überlagert und so ein zweifarbiges Gesamtbild erzeugt. Das überlagerte Tonerbild wird dann in der Fixierstation 68 erneut fixiert und der einseitig bedruckte Aufzeichnungsträger in der Stapeleinrichtung 72 abgelegt.

Weitere Einzelheiten zu dem Drucksystem nach Figur 3 sind der bereits erwähnten EP 0 699 315 A1 zu entnehmen.

Eine weitere Anwendung für die vorliegende Erfindung zur Schrumpfungskompensation ist bei der Anordnung von Druckern als Twin-System gegeben. Hierbei werden zwei Drucker so miteinander gekoppelt, dass zwei Drucker nacheinander zwei Druckvorgänge mit dazwischenliegender Fixierung vornehmen. Beispielsweise bedruckt ein erster Drucker die Papiervorderseite und der zweite Drucker die Papierrückseite. Nach dem ersten Druckvorgang erfolgt die Fixierung, wobei der Schrumpfungseffekt auftritt. Zwischen dem ersten Drucker und dem zweiten Drucker kann eine Wendevorrichtung oder eine Durchlaufvorrichtung angeordnet sein. Auf diese Weise ist der bereits beschriebene Zweifarben-Simplex-Druck oder der Duplex-Druck mit einem Twin-Drucksystem realisierbar.

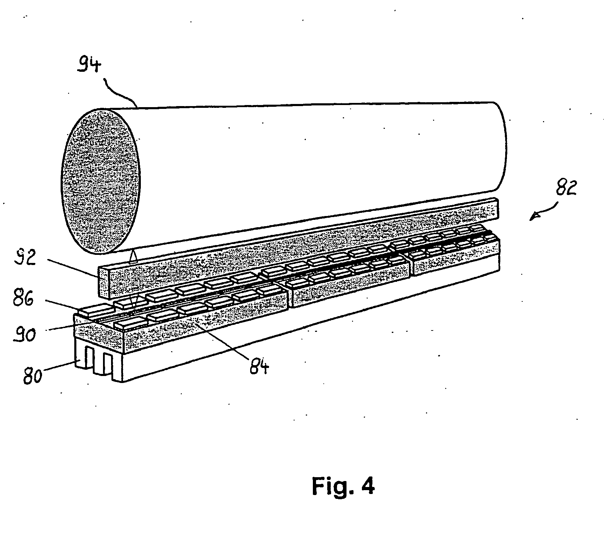

Figur 4 zeigt ein Druckwerk mit einem LED-Zeichengenerator. Auf einem als Wärmesenke ausgebildeten Träger 80 des LED-Zeichengenerators 82 ist eine Modulplatte 84 angeordnet, die eine Vielzahl von Treiber-ICs (integrierte Schaltkreise) 86 sowie eine Zeile 88 mit LEDs (lichtemittierende Dioden) 90 trägt. Jede LED entspricht einem Druckpunkt. Der Abstand der LEDs in der Zeile 90 entspricht der gewünschten Auflösung des Druckbildes. Die Lichtabstrahlflächen der LEDs werden mit einer Glasfaser-Optik, einem sogenannten Selfoc-Baustein 92 oder einem Mikrolinsen-Array, im Maßstab 1:1 auf einen Fotoleiter 94 abgebildet. Auf diese Weise entsteht auf der Oberfläche des Fotoleiters 94 ein latentes elektrostatisches Bild, das durch eine Entwicklerstation mit Toner eingefärbt werden kann. Da für jeden Bildpunkt einer Belichtungszeile 90 eine eigene Lichtquelle vorhanden ist, kann ohne Bewegung von Teilen im Zeichengenerator durch Einschalten aller LEDs zum gleichen Zeitpunkt eine gesamte Bildpunktzeile auf der Fotoleiteroberfläche belichtet werden.

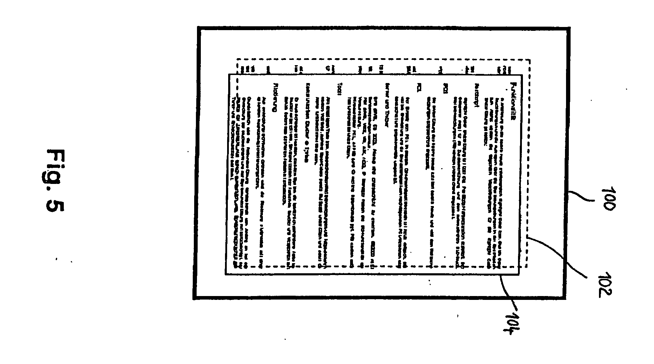

Figur 5 zeigt anhand eines Beispiels, dass aufgrund der Schrumpfung beim Duplexdruck-Betrieb auftretende Problem. Beim Druck von Duplexseiten wird es als störend empfunden, wenn der Text oder das Bild von der Rückseite her durchscheint. Dies lässt sich insbesondere bei dünnen Papieren nicht vermeiden, weshalb man bemüht ist, Text und Bilder auf der Vorderseite und auf der Rückseite genau zueinander auszurichten. Wenn nämlich der Druck auf der einen Seite exakt dort beginnt, wo der Druck auf der anderen Seite aufhört, ist die vom Durchscheinen herrührende Störung unauffälliger. Als übliche Maßnahme hat sich bewährt, dass der Text als Blocksatz aufbereitet wird, wodurch sich gleiche Zeilenlängen ergeben und der nachteilige Effekt relativ unauffällig wird. Wenn nun aufgrund der nach dem Druck der einen Seite erfolgte Fixiervorgang zur Schrumpfung des Papiers führt, so ist die erwähnte Störung aufgrund des Durchscheinens nicht zu beheben. In der Figur 5 ist schematisch ein doppelseitig bedrucktes Blatt 100 dargestellt Ein gestrichelter Rahmen 102 zeigt das Druckformat für eine Rückseite an. Ein ausgezogener Rahmen 104 zeigt das Druckformat für die Vorderseite an. Aufgrund der Schrumpfung stimmen die Ränder der beiden Rahmen 102, 104 nicht miteinander überein, so dass der Text auf der Rückseite durchscheint. Auch durch Verschieben der beiden Rahmen 102, 104 zueinander ist eine völlige Kompensation dieses Effektes nicht möglich.

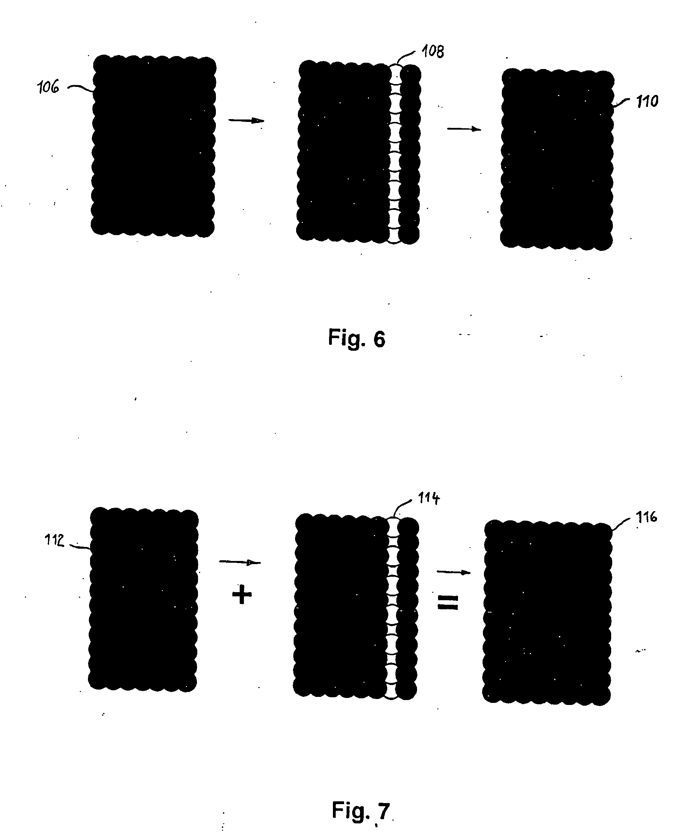

Figur 6 zeigt schematisch eine erste Variante, bei der die Zahl der Bildpunkte entsprechend der zu erwartenden Schrumpfung in Zeilenrichtung verringert wird. Eine Ausgangs-Bitmap 106 enthält in Zeilenrichtung und in Spaltenrichtung angeordnete Bildpunkte. Diese Bitmap 106 wird in einem nachfolgenden Schritt reduziert, indem die Bildpunkte einer Spalte 108 entfernt werden. Das Ergebnis ist eine Bitmap 110, die in Zeilenrichtung gesehen verkürzt ist. Diese Bitmap wird dann beim zweiten Druckvorgang für das bereits geschrumpfte Papier verwendet, wobei die beim Fixierprozess nach dem ersten Druckvorgang erfolgte Schrumpfung in Zeilenrichtung kompensiert worden ist. Eine Kompensation der Schrumpfung in Spaltenrichtung, d.h. im allgemeinen in Richtung des Transports des Papiers kann durch Erhöhen der Druckgeschwindigkeit oder durch Erhöhen der Transportgeschwindigkeit erfolgen, wie dies bereits weiter vorne anhand anderer Beispiele erläutert worden ist.

Figur 7 zeigt ein Beispiel, bei dem Bildpunkte hinzugefügt werden. Eine Ausgangs-Bitmap 112 wird so verändert, dass in Zeilenrichtung gesehen Bildpunkte einer Spalte 114 hinzugefügt werden. Diese Bildpunkte der Spalte 114 werden nicht eingefärbt, jedoch wird die Anzahl der Bildpunkte einer Zeile erhöht. Das Ergebnis ist eine Bitmap 116, die in Zeilenrichtung gesehen mindestens einen Bildpunkt mehr enthält. Diese Bitmap 116 wird dann beim ersten Druckvorgang verwendet, wodurch ein leicht vergrößertes Druckbild entsteht. Beim nachfolgenden Fixiervorgang erfolgt die Schrumpfung, so dass das Druckbild die gleiche Größe erhält wie das beim zweiten Druckvorgang gedruckte Druckbild entsprechend der Größe einer Ausgangs-Bitmap 112.

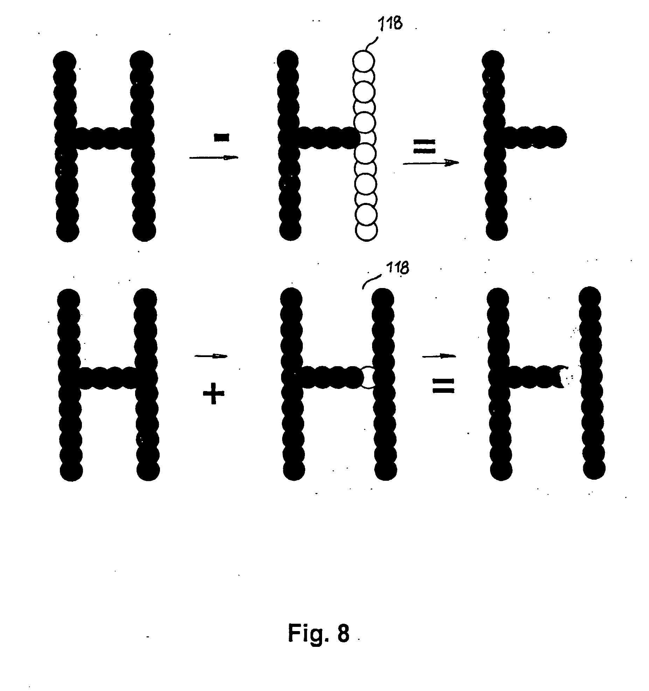

Die beiden Beispiele nach Figur 6 und Figur 7 sind bei relativ großen Objekten gleichwertig. Bei kleineren Objekten zeigt sich jedoch ein Vorteil, wenn die Vorgehensweise nach Figur 7 verwendet wird. Das Einfügen von Bildpunkt-Spalten hat nämlich den Vorteil, dass keine Information verloren geht, wie das nachfolgende Beispiel der Figur 8 anhand des Buchstabens H zeigt. Im oberen Bildteil der Figur 8 wurden die Maßnahmen nach Figur 6 angewandt, d.h. es wurde aus der Ausgangs-Bitmap eine Bildpunkt-Spalte 118 entfernt, was zufällig einen Vertikalstrich für den Buchstaben H betraf. Das Ergebnis ist dann eine Informationsreduktion, denn im Buchstaben H erscheint der vertikale Balken nicht mehr im Druckbild. Im unteren Bildteil ist dasselbe Beispiel gezeigt, wobei jedoch die Maßnahmen nach Figur 7 angewandt wurden. Das Hinzufügen einer Bildpunkt- Spalte 118 mit nicht eingefärbten Bildpunkten führt im Druckbild H zu einer minimalen Störung bei der Abbildung des Buchstabens H, die im gesamten Druckbild jedoch nicht auffällt. Bei der zweiten Variante erfolgt also kein Informationsverlust.

Das in den Figuren 6, 7 und 8 gezeigte Verfahren, kann nicht nur in Zeilenrichtung, sondern auch in Spaltenrichtung angewandt werden. Dementsprechend werden in Transportrichtung des Aufzeichnungsträgers gesehen bei der Bitmap für den ersten Druckvorgang Bildpunktzeilen hinzugefügt oder bei dem zweiten Druckvorgang Bildpunktzeilen weggelassen, entsprechend der zu erwartenden Schrumpfung in Transportrichtung. Vorzugsweise erfolgt das Hinzufügen oder das Weglassen von Bildpunktzeilen im Bereich des Zeilenvorschubs, in welchem keine Einfärbung mit Toner erfolgt.

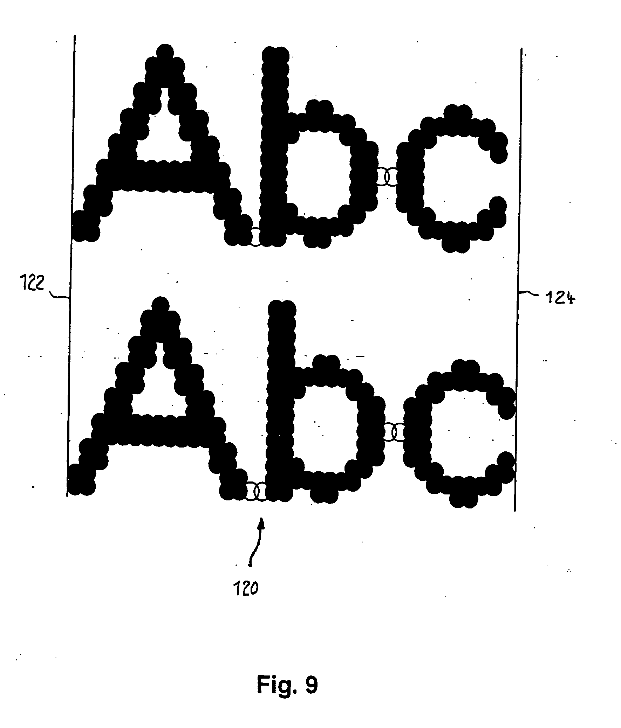

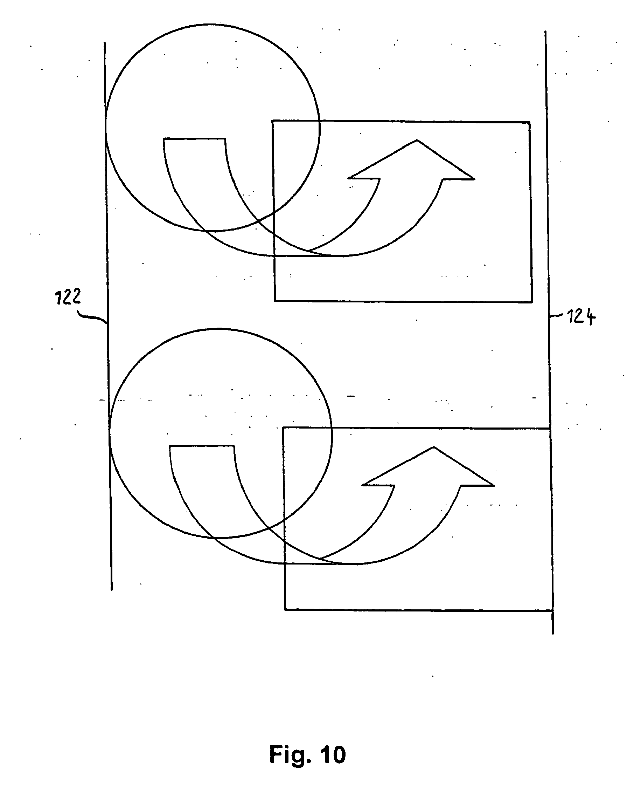

Die Figuren 9 und 10 zeigen weitere Beispiele der Erfindung, bei denen zunächst der Objekttyp der zu druckenden Bildelemente ermittelt wird. Abhängig vom ermittelten Objekttyp erfolgt eine Anpassung der Bildpunkte in Zeilenrichtung und/oder in Spaltenrichtung entsprechend der zu erwartenden Schrumpfung. In Figur 8 ist ein Beispiel für den Objekttyp Text gezeigt. Um einen qualitativ hochwertigen Druck zu erzielen, ist es erforderlich, dass die Dickten und Stege exakt identisch bei allen Zeichen gleicher Größe und gleichen Schnitts sind. Dieses Verfahren setzt nicht erst bei der aufbereiteten Bitmap für Druckseite ein, sondern bereits bei der Generierung dieser Bitmap.

Figur 9 zeigt für das Beispiel Objekttyp Text eine Anpassung der Bildpunkte in Zeilenrichtung durch Einfügen eines Bildpunktes 120 beim ersten Druckvorgang. Umgekehrt ist auch ein Weglassen von Bildpunkten beim zweiten Druckvorgang möglich, wodurch die Schrumpfung in Zeilenrichtung kompensiert wird. Die Randstriche 122, 124 lassen erkennen, wie sich die Zeilenlänge ändert. Das Einfügen oder Weglassen von Bildpunkten erfolgt im Zwischenraum zwischen zwei Textzeichen.

Figur 10 zeigt ein Beispiel für den bjekttyp Graphik. Softwaretechnisch wird Graphik durch Vektoren und andere geometrische Elemente dargestellt. Diese können über einen Maßstabsfaktor beeinflusst werden, ohne dass die ursprünglichen Proportionen verändert werden. In der Figur 10 wurde der Maßstabsfaktor für den unteren Bildteil vergrößert, so dass die dargestellte Graphik den Bildrahmen 122, 124 vollständig ausfüllt. Selbstverständlich ist auch eine Maßstabsverkleinerung denkbar, die dann für den zweiten Druckvorgang angewendet wird.

Bilder können relativ einfach durch Einfügen und/oder Weglassen von Spalten und Zeilen angepasst werden, ohne dass eine merkliche Qualitätsveränderung sichtbar wird. Hier kann also das Verfahren nach den Figuren 6 oder 7 angewandt werden.

Als weiteres Verfahren ist es für den Objekttyp Bild möglich, wenn das Bild sich in einem unverarbeiteten (ungeditherten) Zustand befindet. Dann ist es möglich, das Bild während dieses Vorgangs auf die gewünschte Bildgröße zu generieren.

Eine weitere Möglichkeit beim Objekttyp Bild liegt in der Verschiebung des Bildes, wodurch eine Veränderung des Bildinhaltes vollständig vermieden wird. Die Verschiebung richtet sich nach der Position des Bildes auf dem Trägermaterial. Ist das Bild am Rand, so wird es exakt an den neuen Rand platziert. Befindet sich das Bild in der Mitte des Druckbereichs, so wird es gemäß der Schrumpfung neu platziert. Der Abstand zu den anderen Objekten der Druckseite wird dadurch vergrößert oder verkleinert.

Die gezeigten Maßnahmen können auch untereinander kombiniert werden. So kann eine Kompensation der Schrumpfung in Papiervorschubrichtung erfolgen, bei dem die Zeilenfrequenz des Zeichengenerators entsprechend der zu erwartenden Schrumpfung in Transportrichtung geändert wird. Zum Erzeugen des zweiten Tonerbildes in gestauchter Form wird dann die Zeilenfrequenz gegenüber der Zeilenfrequenz im ersten Druckvorgang erhöht. Eine andere Variante liegt darin, die Transportgeschwindigkeit des Aufzeichnungsträgers zu ändern. Beispielsweise wird beim zweiten Druckvorgang zum Aufbringen des zweiten Tonerbildes in gestauchter Form die Transportgeschwindigkeit des Aufzeichnungsträgers in der zweiten Druckeinrichtung gegenüber der Transportgeschwindigkeit beim ersten Druckvorgang verringert. Weiterhin kann der Grad der Schrumpfung des Aufzeichnungsträgers empirisch ermittelt werden und abhängig vom Grad der Schrumpfung die Kompensationsmaßnahmen vorgenommen werden. Die Schrumpfung kann beispielsweise mit Hilfe von Tektoren ermittelt werden, die beispielsweise die Längendifferenz eines Einzelblattes vor und nach dem ersten Fixiervorgang feststellen.

Obgleich in den Zeichnungen und in der vorhergehenden Beschreibung bevorzugte Ausführungsbeispiele aufgezeigt und detailliert beschrieben sind, sollte dies als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

### Bezugszeichenliste

- 10: Hochleistungsdrucker
- D1: erstes Druckwerk
- D2: zweites Druckwerk
- 12, 14: Fixierstationen
- 16: Papiereingabe
- 18 - 24: Vorratsbehälter
- 26: Papiereingabekanal
- 27: Transportkanal
- 28: Eingabeabschnitt
- 30: Papierausgabe
- 32 - 36: Ausgabebehälter
- 38, 40: Ausgabekanäle
- 42: Ausgabeabschnitt
- 44, 46: Umdruck-Transportwege
- 48: Verbindungskanal
- 50: Zuführkanal
- 52: Abführkanal
- W1 - W6: Weichen
- 58: Hochleistungsdrucksystem
- 60: Trägermaterial
- 61: Zwischenträger
- 62: Ladeeinrichtung
- 63: Zeichengenerator
- 64: Entwicklerstation
- 65: Umdruckstation
- 66: Reinigungsstation
- 67: Entladeeinrichtung
- 68: Fixierstation
- 69: Fixierwalze
- 70: Andruckwalze
- 71: Führungsrollen
- 72: Stapeleinrichtung
- 73: Vorratsbereich
- 74: Zuführrollen
- 75: Transporteinrichtung
- 76: Transportband
- 77: Antriebswelle
- 78: Umlenkeinrichtung
- E1, E2: Entwicklerzonen
- 80: Träger
- 82: LED-Zeichengenerator
- 84: Modulplatte
- 86: Treiber-ICs
- 88: Zeile
- 90: LEDs
- 92: Selfoc-Baustein
- 94: Fotoleiter
- 96: Kompensationsoptik
- 100: Einzelblatt
- 102, 104: Rahmen
- 106: Ausgangs-Bitmap
- 108: Bildpunkt-Spalte
- 110: geänderte Bitmap
- 112: Ausgangs-Bitmap
- 114: Bildpunkt-Spalte
- 116: geänderte Bitmap
- 120: Bildpunkt
- 122, 124: Randstriche

- L1, L2: Länge
- 98: Mittelachse
- 100, 102: Strahlengänge
- 104: Zylinderlinse
- A1, A2: Länge
- 106: Zylinderlinse
- A3, A4: Länge

## Patentansprüche

1. Verfahren zum Bedrucken eines Aufzeichnungsträgers,
bei dem ein Aufzeichnungsträger in einem ersten Druckvorgang mit einem ersten Tonerbild bedruckt wird,
das erste Tonerbild in einer Fixiereinrichtung (12, 14; 68) auf dem Aufzeichnungsträger fixiert wird, wobei der Aufzeichnungsträger längs mindestens einer Hauptachse schrumpft,
bei dem anschließend derselbe Aufzeichnungsträger in einem zweiten Druckvorgang mit einem zweiten Tonerbild bedruckt wird,
bei der anhand digitaler Daten für die betreffende Druckseite der Objekttyp der zu druckenden Bildelemente ermittelt wird,
und bei dem beim Generieren einer Bitmap für die Erzeugung eines latenten Bildes für den ersten Druckvorgang oder den zweiten Druckvorgang abhängig vom Objekttyp eine Anpassung der Bildpunkte in Richtung der Hauptachse entsprechend der zu erwartenden Schrumpfung erfolgt,
wobei beim zweiten Druckvorgang das zweite Tonerbild in Richtung der Hauptachse in einer gegenüber dem ersten Druckvorgang gestauchten Form auf den Aufzeichnungsträger aufgebracht wird.

2. Verfahren nach Anspruch 1, bei dem als Objekttyp für die zu druckenden Bildelemente der Objekttyp Text, der Objekttyp Grafik und der Objekttyp Bild verwendet wird.

3. Verfahren nach Anspruch 2, bei dem beim Objekttyp Text eine Anpassung der Bildpunkte in Zeilenrichtung durch Einfügen von Bildpunkten beim ersten Druckvorgang oder durch Weglassen von Bildpunkten beim zweiten Druckvorgang erfolgt.

4. Verfahren nach Anspruch 2 oder 3, bei dem das Einfügen oder Weglassen von Bildpunkten im Zwischenraum zwischen zwei Textzeichen erfolgt.

5. Verfahren nach Anspruch 1 oder 2, beim dem beim Objekttyp Grafik Grafikvektoren und geometrische Grundelemente zur Beschreibung der Grafik verwendet werden,
und bei dem die Anpassung der Bildpunkte durch Änderung des Maßstabsfaktors für die Vektoren und die geometrischen Grundelemente erfolgt.

6. Verfahren nach Anspruch 1 oder 2, bei dem beim Objekttyp Bild eine Anpassung der Bildpunkte durch Verschieben von Bildelementen in Zeilenrichtung und/oder in Transportrichtung des Trägermaterials erfolgt.

7. Verfahren nach Anspruch 6, bei dem die Verschiebeoperation für die Bildpunkte in Bezug auf eine Randposition erfolgt, wobei die zu erwartende Schrumpfung in Zeilenrichtung und/oder in Transportrichtung für den Aufzeichnungsträger und die damit verbundene Änderung der Randposition berücksichtigt wird.

8. Einrichtung zum Bedrucken eines Aufzeichnungsträgers,
mit einem Druckwerk, welches so eingerichtet ist, dass es in einem ersten Druckvorgang den Aufzeichnungsträger mit einem ersten Tonerbild bedruckt ,
mit einer Fixiereinrichtung (12, 14; 68), die so eingerichtet ist, dass sie das erste Tonerbild auf dem Aufzeichnungsträger fixiert, wobei der Aufzeichnungsträger längs mindestens einer Hauptachse schrumpft,
wobei das Druckwerk oder ein weiteres Druckwerk so eingerichtet ist, dass es in einem zweiten Druckvorgang anschließend denselben Aufzeichnungsträger mit einem zweiten Tonerbild bedruckt,
mit einer Steuereinheit, die so eingerichtet ist, dass sie anhand digitaler Daten für die betreffende Druckseite den Objekttyp der zu druckenden Bildelemente ermittelt,
und die beim Generieren einer Bitmap für die Erzeugung eines latenten Bildes für den ersten Druckvorgang oder den zweiten Druckvorgang abhängig vom Objekttyp eine Anpassung der Bildpunkte in Richtung der Hauptachse entsprechend der zu erwartenden Schrumpfung durchführt,
wobei das Druckwerk oder das zweite Druckwerk so eingerichter ist, dass es beim zweiten Druckvorgang das zweite Tonerbild in Richtung der Hauptachse in einer gegenüber dem ersten Druckvorgang gestauchten Form auf den Aufzeichnungsträger aufbringt.

9. Einrichtung nach Anspruch 8, wobei der Objekttyp für die zu druckenden Bildelemente der Objekttyp Text, der Objekttyp Grafik und/oder der Objekttyp Bild ist.

10. Einrichtung nach Anspruch 8, wobei die Steuereinheit beim Objekttyp Text eine Anpassung der Bildpunkte in Zeilenrichtung durch Einfügen von Bildpunkten beim ersten Druckvorgang oder durch Weglassen von Bildpunkten beim zweiten Druckvorgang durchführt.

11. Einrichtung nach Anspruch 7 oder 8, wobei die Steuereinheit Bildpunkte im Zwischenraum zwischen zwei Textzeichen einfügt oder weglässt.

12. Einrichtung nach Anspruch 7 oder 8, wobei beim Objekttyp Grafik Grafikvektoren und geometrische Grundelemente zur Beschreibung der Grafik dienen, und die Steuereinheit die Bildpunkte durch Änderung des Maßstabsfaktors für die Vektoren und die geometrischen Grundelemente anpasst.

13. Einrichtung nach Anspruch 7 oder 8, wobei die Steuereinheit beim Objekttyp Bild die Bildpunkte durch Verschieben von Bildelementen in Zeilenrichtung und/oder in Transportrichtung des Aufzeichnungsträgers anpasst.

14. Einrichtung nach Anspruch 13, wobei die Steuereinheit die Verschiebeoperation für die Bildpunkte in Bezug auf eine Randposition durchführt und dabei die zu erwartende Schrumpfung in Zeilenrichtung und/oder in Transportrichtung für den Aufzeichnungsträger und die damit verbundene Änderung der Randposition berücksichtigt.

## Claims

1. A method for printing a recording medium,
in which a recording medium is printed with a first toner image in a first print process,
the first toner image is fixed on the recording medium in a fixing device (12, 14; 68), wherein the recording medium shrinks along at least one main axis,
in which the same recording medium is subsequently printed with a second toner image in a second print process,
in which the object type of the image elements to be printed is determined for the appertaining print page using digital data,
and in which, in the generation of a bitmap for the generation of a latent image for the first print process or the second print process, dependent on the object type an adaptation of the image points in the direction of the main axis occurs corresponding to the expected shrinkage,
wherein, in the second print process, the second toner image is applied on the recording medium in the direction of the main axis in a form compressed relative to that of the first print process.

2. The method according to claim 1, in which the object type text, the object type graphic and the object type image are used as an object type for the image elements to be printed.

3. The method according to claim 2, in which, given the object type text, an adaptation of the image points in the line direction occurs via insertion of image points in the first print process or via omission of image points in the second print process.

4. The method according to claim 2 or 3, in which the insertion or omission of image points occurs in the intervening space between two text characters.

5. The method according to claim 1 or 2, in which, given the object type graphic, graphic vectors and geometric basic elements are used for the description of the graphic,
and in which the adaptation of the image points occurs via alteration of the scale factor for the vectors and the geometric basic elements.

6. The method according to claim 1 or 2, in which an adaptation of the image points via displacement of image elements in the line direction and/or in the transport direction of the carrier material occurs given the object type image.

7. The method according to claim 6, in which the displacement operation for the image points occurs relative to an edge position, wherein the expected shrinkage in the line direction and/or in the transport direction is taken into account for the recording medium and the change of the edge position connected with this.

8. A device for printing of a recording medium,
with a printing group that is fashioned such that it prints the recording medium with a first toner image in a first print process,
with a fixing device (12, 14; 68) that is fashioned such that it fixes the first toner image on the recording medium, wherein the recording medium shrinks along at least one main axis,
wherein the printing group or a further printing group that is fashioned such that it subsequently prints the same recording medium with a second toner image in a second print process,
with a control unit that is fashioned such that it determines the object type of the image elements to be printed for the appertaining print page using digital data,
and that, in the generation of a bitmap for the generation of a latent image for the first print process or the second print process, implements an adaptation of the image points in the direction of the main axis dependent on the object type, corresponding to the expected shrinkage,
wherein, in the second process, the printing group or the second printing group is fashioned such that it applies the second toner image on the recording medium in the direction of the main axis in a form compressed relative to that of the first print process.

9. The device according to claim 8, wherein the object type for the image elements to be printed is the object type text, the object type graphic and/or the object type image.

10. The device according to claim 8, wherein, given the object type text, the control unit implements an adaptation of the image points in the line direction via insertion of image points in the first print process or via omission of image points in the second print process.

11. The device according to claim 7 or 8, wherein the control unit inserts or omits image points in the intervening space between two text characters.

12. The device according to claim 7 or 8, wherein graphic vectors and geometric basic elements serve for description of the graphic given the object type graphic,
and, the control unit adapts the image points via alteration of the scale factor for the vectors and the geometric basic elements.

13. The device according to claim 7 or 8, wherein the control unit adapts the image points via displacement of image elements in the line direction and/or in the transport direction of the recording medium given the object type image.

14. The device according to claim 13, wherein the control unit implements the displacement operation for the image points relative to an edge position and thereby accounts for the expected shrinkage in the line direction and/or in the transport direction for the recording medium and the change of the edge position connected with this.

## Revendications

1. Procédé d'impression d'un support d'informations,
dans lequel un support d'informations est imprimé dans un processus d'impression avec une première image formée par du toner,
la première image formée par du toner est fixée sur le support d'informations dans un dispositif de fixation (12, 14 ; 68), le support d'informations se plissant le long d'au moins un axe principal,
dans lequel le même support d'informations est ensuite imprimé dans un deuxième processus d'impression avec une deuxième image formée par du toner,
dans lequel le type d'objet des éléments d'image à imprimer est déterminé en se fondant sur des données numériques pour la page imprimée concernée,
et dans lequel une adaptation des points d'image est effectuée dans la direction de l'axe principal correspondant au plissement attendu lorsque l'on génère un bitmap destiné à générer une image latente pour le premier processus d'impression ou le deuxième processus d'impression en fonction du type d'objet,
lors du deuxième processus d'impression la deuxième image formée par du toner étant déposée dans la direction de l'axe principale sur le support d'informations sous une forme écrasée par rapport au premier processus d'impression.

2. Procédé selon la revendication 1, dans lequel on utilise comme type d'objet pour les éléments d'image à imprimer le type d'objet Texte, le type d'objet Graphique et le type d'objet Image.

3. Procédé selon la revendication 2, dans lequel pour le type d'objet Texte on effectue une adaptation des points d'image dans la direction des lignes en insérant des points d'image pendant le premier processus d'impression ou en supprimant des points d'image pendant le deuxième processus d'impression.

4. Procédé selon la revendication 2 ou 3, dans lequel l'insertion ou la suppression de points d'image est effectuée dans l'espace intermédiaire entre deux caractères de texte.

5. Procédé selon la revendication 1 ou 2, dans lequel pour le type d'objet Graphique on utilise des vecteurs graphiques et des éléments de base géométriques pour décrire le graphique,
et dans lequel l'adaptation des points d'image est effectuée en modifiant le facteur d'échelle des vecteurs et des éléments de base géométriques.

6. Procédé selon la revendication 1 ou 2, dans lequel pour le type d'objet Image on effectue une adaptation des points d'image en déplaçant des éléments d'image dans la direction des lignes et/ou dans la direction de transport du matériau de support.

7. Procédé selon la revendication 6, dans lequel l'opération de déplacement des points d'image est effectuée par rapport à une position en bordure en tenant compte du plissement attendu dans la direction des lignes et/ou dans la direction de transport du support d'informations et de la modification associée de la position en bordure.

8. Dispositif d'impression d'un support d'informations, ledit dispositif comportant
un élément d'impression qui est disposé de telle sorte que dans un premier processus d'impression il imprime le support d'informations avec une première image formée par du toner,
un dispositif de fixation (12, 14 ; 68) qui est disposé de telle sorte qu'il fixe la première image formée par du toner sur le support d'informations, le support d'informations se plissant le long d'au moins d'un axe principal,
l'élément d'impression ou un autre élément d'impression étant disposé de telle sorte qu'il imprime ensuite le même support d'informations avec une deuxième image formée par du toner dans un deuxième processus d'impression,
une unité de commande qui est disposée de telle sorte qu'elle détermine le type d'objet des éléments d'image à imprimer en se fondant sur des données numériques pour la page d'impression concernée,
et qui effectue, lorsque l'on génère un bitmap destiné à générer une image latente pour le premier processus d'impression ou le deuxième processus d'impression en fonction du type d'objet, une adaptation des points d'image dans la direction de l'axe principal correspondant au plissement attendu,
l'élément d'impression ou le deuxième élément d'impression étant disposé de telle sorte que lors du deuxième processus d'impression il dépose la deuxième image formée par du toner sur le support d'informations dans la direction de l'axe principal sous une forme écrasée par rapport au premier processus d'impression.

9. Dispositif selon la revendication 8, dans lequel le type d'objet pour les éléments d'image à imprimer est le type d'objet Texte, le type d'objet Graphique et/ou le type d'objet Image.

10. Dispositif selon la revendication 8, dans lequel l'unité de commande effectue pour le type d'objet Texte une adaptation des points d'image dans la direction des lignes en insérant des points d'image lors du premier processus d'impression ou en supprimant des points d'image lors du deuxième processus d'impression.

11. Dispositif selon la revendication 7 ou 8, dans lequel l'unité de commande insère ou supprime des points d'image dans l'espace intermédiaire entre deux caractères de texte.

12. Dispositif selon la revendication 7 ou 8, dans lequel pour le type d'objet Graphique des vecteurs graphiques et des éléments de base géométriques servent à décrire le graphique,
et l'unité de commande adapte les points d'image en modifiant le facteur d'échelle des vecteurs et des éléments de base géométriques.

13. Dispositif selon la revendication 7 ou 8, dans lequel l'unité de commande adapte pour le type d'objet Image des points d'image en déplaçant des éléments d'image dans la direction des lignes et/ou dans la direction de transport du support d'informations.

14. Dispositif selon la revendication 13, dans lequel l'unité de commande effectue l'opération de déplacement des points d'image par rapport à une position en bordure et tient compte pour cela du plissement attendu dans la direction des lignes et/ou dans la direction de transport du support d'informations et de la modification associée de la position en bordure.
